# EUROPEAN PATENT SPECIFICATION

(11) **EP 2 464 251 B1**
(45) Date of publication and mention of the grant of the patent: **28.03.2018**
(21) Application number: 10742542.3
(22) Date of filing: 05.08.2010
(51) Int. Cl.: A24D 1/02, A24D 3/06, A24D 3/04, A24C 5/56

(54) **CIGARETTE FILTER**
ZIGARETTENFILTER
FILTRE DE CIGARETTE

(30) Priority: 14.08.2009 GB 0914250; 16.07.2010 GB 201011993
(43) Date of publication of application: 20.06.2012
(73) Proprietor: Innovia Films Limited, Wigton, Cumbria CA7 9BG (GB)
(72) Inventor: WATTERS, Paul, Wigton Cumbria CA7 9BG (GB); MARSHALL, Colin, Wigton Cumbria CA7 9BG (GB)
(74) Representative: Brand, Thomas Louis
(86) International application number: PCT/GB2010/051296
(87) International publication number: WO 2011/018649

(56) References cited:
- US-A- 1 983 530
- US-A- 2 108 808
- US-A1- 2002 153 017
- US-A1- 2003 178 039
- anonymous: "Far-reaching effect of the tobacco ordinance (TVO)", Siegwerk Ink Packaging , 2005, XP002612056, Bargen, CH Retrieved from the Internet: URL:http://www.siegwerk.com/fileadmin/user _upload/cc/Direct/direct_44_e.pdf [retrieved on 2010-11-30]
- Anonymous: "Verordnung über Tabakerzeugnisse", , 20 December 1977 (1977-12-20), XP002612057, Retrieved from the Internet: URL:http://www.gesetze-im-internet.de/bund esrecht/tabv_1977/gesamt.pdf [retrieved on 2010-11-30]

## Description

The present invention concerns a cigarette filter having a filtration material and a tipping film, more particularly a biodegradable tipping film with excellent physical properties, in particular with regard to elongation, tensile strength and shrinkage, but also as far as flatness and tube/curl are concerned.

There is a current demand for cigarette tipping films which are transparent, allowing the smoker to view the effectiveness of the filter material enclosed within the tipping film.

Certain biodegradable substrates have been considered for use as cigarette tipping films.

For example, US 1,983,530 describes a tissue in which tobacco is wrapped to form a cigarette, comprising a transparent sheet or film of regenerated cellulose less than 0.02 mm in thickness and free of softener.

US 2002/0153017 describes a filter for use in the tobacco processing industry which includes a wrapping material section wrapped around filtering material and a covering paper section fitted around the wrapping material section. The covering paper section comprises at least one window and the wrapping material section is transparent, at least in some areas.

US 2,108,808 describes a transparent, moisture-proof material comprising paper containing a wetting agent and having its voids and spaces substantially completely filled with a water-soluble impregnant and thinly coated with a transparent moisture-proofing composition, said impregnant being present in an amount of 10% to 30% by weight of the paper.

US 2003/0178039 describes a circumscribing plug wrap and tipping material formed from a cast sheet which includes 20 to 70 percent by weight of a water dispersible cellulose material, 20 to 70 percent by weight of a water soluble film forming material and 0 to 10 percent by weight of a humectant.

However, because of stringent demands in the tobacco industry with regard to the chemical make up of tipping films, and also with regard to their physical properties, there is a need to provide an improved form of tipping film which is substantially free from certain specified contaminants and which has excellent properties as far as elongation, tensile strength, shrinkage, flatness and tube/curl are concerned. In particular, the mechanical tolerances of any such film must be carefully controlled in order to allow the film satisfactorily to be deployed in the machinery used by the tobacco industry to wrap tipping papers around filter tips. Because of the relatively small size of the unit film, and the necessity for it to be tightly and neatly wound on the filter, it has proved difficult to develop a filmic material, particularly one with other desirable qualities such as biodegradability and transparency to meet these criteria.

The present invention seeks to address these issues.

According to the present invention there is provided a cigarette filter tipping film comprising a biodegradable substrate, softener in an amount of less than 25% by weight of the biodegradable substrate and an antiblock additive, the tipping film being at least partly transparent.

The biodegradable substrate is selected from biodegradable substrates, PLA substrates, starch based polymers, hydroxyalkanoates and other biopolymers, but is preferably a cellulosic substrate.

The invention also provides a cigarette filter comprising a filtration material encased in a cylinder of aforesaid tipping film.

Preferably the tipping film is at least mostly transparent so that the filtration material can be viewed through the tipping film.

Preferably the softener is present in the tipping film in an amount of less than 24% by weight, more preferably less than 21% by weight and most preferably less than 18% by weight of the biodegradable substrate.

The softener may be selected from any suitable material, but is preferably selected from glycerol, propane-1,2-diol, and any other suitable softener selected from the German Tobacco Ordnance (TVO) list, the contents of
which are hereby incorporated by reference, and an English translation of which is reproduced as appendix 1 hereto, and combinations of two or more thereof.

The tipping film itself will generally be cast and then wound onto a reel prior to eventual unwinding and slitting for use as a cigarette tipping film. In order to allow the film to be wound onto a reel without sticking to itself, the substrate is provided with an antiblock/winding aid additive. The antiblock/winding aid additive is preferably provided in an amount of less than about 0.5%, more preferably less than about 0.4, even more preferably less than about 0.3 and most preferably less than about 0.2% by weight of the biodegradable substrate.

The antiblock/winding aid may be selected from any suitable material, but is preferably selected from amorphous silica, polyethylene glycol, and any other suitable antiblock/winding agent selected from the TVO list, and combinations of two or more thereof.

We have surprisingly found that by careful selection of the quantity of softening agent in the tipping film, and in preferred embodiments of the invention of the type of softening agent in the tipping film, certain problems exhibited in the art with reference to conventional biodegradable substrates can be avoided. For example, certain conventional biodegradable substrates which would otherwise be suitable as tipping films have been found to be too easily elongated - a property which causes problems in the machinery commonly used in the tobacco industry for rolling tipping materials around cigarette filters. Certain conventional biodegradable substrates have been found to be insufficiently flat, to exhibit unacceptable levels of curl, to lack sufficient tensile strength and/or to be too elastic, to be to susceptible to shrinkage and/or to have inadequate optical properties.

The tipping films of the invention exhibit an elongation in the machine direction of less than 15%, more preferably less than 13% and most preferably less than 11% when subjected to standard testing conditions referred to herein in the Examples.

The tipping films of the invention exhibit excellent properties with regard to flatness and tube/curl. Preferably the tipping films of the invention exhibit a flatness of less than about 4cm, preferably less than 3cm and exhibit a tube/curl of less than 45°, preferably 0° once wound (Flatness is measured by placing a 6m length of cast film on a flatness table and pulling the film until tight. Flatness is measured by using graduated rulers, the results are recorded as, Flatness (cm) = Centre reading (cm) - Edge reading (cm). Tube/curl Is measured by hanging approx. 600mm of cast film from a suspended mill roll, strips are cut n the machine direction 100mm apart across the width of the roll, film is left to stand for 15-20 seconds, visual checks for tube and curl are made and results are recorded in degrees).

It may also be important to maintain the tensile strength of the tipping film in order to allow satisfactory machinability of the film. The tipping films
of the invention exhibit a tensile strength in the machine direction of more than 140MPa, more preferably more than 150MPa and most preferably more than 155MPa when subjected to standard testing conditions referred to herein in the Examples.

It may also be important to maintain the elasticity of the tipping film in order to allow satisfactory machinability of the film. The tipping films of the invention exhibit a Young's Modulus in the machine direction of more than 4000MPa, more preferably more than 5000MPa and most preferably more than 5500MPa when subjected to standard testing conditions referred to herein in the Examples.

It may also be important to ensure that the tipping films of the invention do not exhibit too high a shrinkage, in order to allow satisfactory machinability of the film. The tipping films of the invention exhibit a shrinkage under tropical conditions in the machine and/or transverse directions of less than 5%, more preferably less than 4% and most preferably less than 3.75% when subjected to standard testing conditions referred to herein in the Examples.

It may also be important to maintain the optical properties of the tipping film. Preferably the tipping films of the invention exhibit a Haze of less than 2.15, more preferably less than 2.10 and most preferably less than 2.05 when subjected to standard testing conditions referred to herein in the Examples. Preferably the tipping films of the invention exhibit a Gloss of more than 98, more preferably more than 99 and most preferably more than 100 when subjected to standard testing conditions referred to herein in the Examples.

### EXAMPLES

A 28µm film of regenerated cellulose was cast from solution under standard conditions and in the presence of a glycerol softener in an amount of approximately 12% by weight and an amorphous silica antiblock in an amount of approximately 0.1 % by weight. Any other additives and components of the film were present in standard quantities, and selected from the TVO list.

Five samples of the film, and a comparative sample containing approximately 20% by weight softener (25% softener by weight of cellulosic substrate) were subjected to physical testing in accordance with BS2782-3, as amended by BS1133 to determine Secant 1%, Tensile Strength, Elongation, Load and Youngs Modulus.

The results are presented below in Table 1:

**Table 1**

| **EG** | code | | | | | | | | | | |
|---|---|---|---|---|---|---|---|---|---|---|---|
| 1 | 252892 | 7010 | 163 | 7.036 | 105.8 | 6782 | 5870 | 114 | 11.5 | 74.07 | 4186 |
| 2 | 252904 | 7470 | 179 | 12.48 | 120.8 | 7095 | 4190 | 104 | 31.8 | 70.14 | 4175 |
| 3 | 252908 | 7550 | 164 | 8.913 | 111 | 7523 | 3980 | 106 | 35.48 | 71.27 | 3952 |
| 4 | 252922 | 6830 | 175 | 12.75 | 118.3 | 6404 | 4650 | 109 | 39.75 | 73.73 | 4477 |
| 5 | 252930 | 7420 | 181 | 14.02 | 122.3 | 7070 | 7870 | 179 | 12 | 120.6 | 7275 |
| | **Av**. | **6703** | **168** | **10.22** | **112.41** | **6471** | **5100** | **117** | **24.65** | **78.29** | **4670** |
| | | | | | | | | | | | |
| 6 | comp. | 5160 | 153 | 19.47 | 101.20 | 4929 | 2010 | 65 | 46.64 | 43.26 | 2020 |

It will be seen that the films of Examples 1 to 5 exhibit considerably less elongation than the comparative example, a property which facilitates the compatibility of such films with conventional industrial plant for the manufacture of cigarette tipping films.

The films were further subjected to Coefficient of Friction (COF) measurement in accordance with ASTMD1894. The results are shown below in Table 2:

**Table 2**

| | **A-A** | |
|---|---|---|
| **Sample** | **Static** | **Dynamic** |
| 1 | 0.499 | 0.415 |
| 2 | 0.605 | 0.473 |
| 3 | 0.557 | 0.463 |
| 4 | 0.589 | 0.497 |
| 5 | 0.565 | 0.483 |
| 6 Comparative | 0.603 | 0.493 |

It will be seen that the films of Examples 1 to 5 exhibit acceptable COF properties in relation to the comparative example.

The films were further subjected to optical characterisation as follows:
- Haze was measured in accordance with ASTMD1003
- Gloss was measured in accordance with ASTM D2457

The results are shown below in Tables 3a and 3b:

**Table 3a**

| | **Haze** | | | |
|---|---|---|---|---|
| **Sample** | **1** | **2** | **3** | **Ave** |
| 1 | 1.76 | 1.73 | 1.81 | 1.77 |
| 2 | 1.91 | 2.04 | 2.04 | 2.00 |
| 3 | 1.83 | 1.92 | 1.83 | 1.86 |
| 4 | 1.88 | 2.04 | 1.93 | 1.95 |
| 5 | 1.99 | 2.08 | 1.98 | 2.02 |
| 6 Comp. | 2.15 | 2.16 | 2.19 | 2.17 |

**Table 3b**

| **Gloss** | | | |
|---|---|---|---|
| **1** | **2** | **3** | **Ave** |
| 101.3 | 106.2 | 102.5 | 103.3 |
| 106.8 | 106.0 | 106.0 | 106.3 |
| 103.6 | 103.1 | 106.0 | 104.2 |
| 104.8 | 104.7 | 106.6 | 105.4 |
| 103.3 | 104.6 | 101.8 | 103.2 |
| 97.7 | 98.1 | 98.1 | 98.0 |

It will be seen that the films of Examples 1 to 5 exhibit improved optical properties in relation to the comparative example.

The shrinkage properties of the films were investigated under tropical conditions (90% relative humidity at 38°C), and the results are shown in Table 4:

**Table 4**

| | | *0* | *1* | *Results* | *3* | *Results* | *6* | *Results* | *10* | *Results* | *14* | *Results* | *28* | *Results* |
|---|---|---|---|---|---|---|---|---|---|---|---|---|---|---|
| | MD1 | 107.00 | 104.52 | -2.32 | 104.87 | -1.99 | 104.78 | -2.07 | 103.01 | -3.73 | 103.09 | -3.65 | 103.80 | -2.99 |
| | MD2 | 106.67 | 104.45 | -2.08 | 104.49 | -2.04 | 104.06 | -2.45 | 103.04 | -3.40 | 103.26 | -3.20 | 103.56 | -2.92 |
| | MD3 | 106.45 | 103.95 | -2.35 | 104.14 | -2.17 | 103.51 | -2.76 | 102.87 | -3.36 | 102.89 | -3.34 | 102.87 | -3.36 |
| **1** | TD1 | 106.43 | 104.76 | -1.57 | 104.28 | -2.02 | 104.49 | -1.82 | 103.82 | -2.45 | 103.79 | -2.48 | 104.19 | -2.10 |
| | TD2 | 105.93 | 104.58 | -1.27 | 104.12 | -1.71 | 104.10 | -1.73 | 103.33 | -2.45 | 103.54 | -2.26 | 103.72 | -2.09 |
| | TD3 | 105.64 | 104.07 | -1.49 | 103.77 | -1.77 | 103.68 | -1.86 | 103.00 | -2.50 | 103.24 | -2.27 | 102.68 | -2.80 |
| **Ave MD** | | 0.00 | | -2.25 | | -2.07 | | -2.43 | | -3.50 | | -3.40 | | -3.09 |
| **Ave TD** | | 0.00 | | -1.44 | | -1.83 | | -1.80 | | -2.47 | | -2.34 | | -2.33 |
| | MD1 | 95.06 | 92.49 | -2.70 | 92.62 | -2.57 | 93.16 | -2.00 | 92.76 | -2.42 | 93.01 | -2.16 | 92.46 | -2.74 |
| | MD2 | 95.05 | 92.80 | -2.37 | 92.53 | -2.65 | 93.66 | -1.46 | 92.97 | -2.19 | 93.16 | -1.99 | 93.12 | -2.03 |
| **2** | MD3 | 94.83 | 92.79 | -2.15 | 92.72 | -2.23 | 94.03 | -0.84 | 93.46 | -1.44 | 93.56 | -1.34 | 93.12 | -1.80 |
| | TD1 | 94.84 | 94.20 | -0.67 | 94.07 | -0.81 | 92.73 | -2.22 | 91.88 | -3.12 | 92.05 | -2.94 | 91.69 | -3.32 |
| | TD2 | 95.41 | 94.46 | -1.00 | 94.04 | -1.44 | 92.40 | -3.15 | 91.84 | -3.74 | 92.11 | -3.46 | 91.97 | -3.61 |
| | TD3 | 95.40 | 94.50 | -0.94 | 94.38 | -1.07 | 92.65 | -2.88 | 92.43 | -3.11 | 92.23 | -3.32 | 91.97 | -3.60 |
| **Ave MD** | | 0.00 | | -2.41 | | -2.48 | | -1.43 | | -2.02 | | -1.83 | | -2.19 |
| **Ave TD** | | 0.00 | | -0.87 | | -1.11 | | -2.75 | | -3.33 | | -3.24 | | -3.51 |
| | MD1 | 94.66 | 92.42 | -2.37 | 92.17 | -2.63 | 92.24 | -2.56 | 91.37 | -3.48 | 92.27 | -2.52 | 91.74 | -3.08 |
| | MD2 | 94.34 | 92.16 | -2.31 | 92.14 | -2.33 | 92.37 | -2.09 | 91.30 | -3.22 | 91.62 | -2.88 | 91.53 | -2.98 |
| **3** | MD3 | 94.31 | 92.10 | -2.34 | 91.96 | -2.49 | 92.33 | -2.10 | 91.95 | -2.50 | 91.88 | -2.58 | 91.70 | -2.77 |
| | TD1 | 95.07 | 92.61 | -2.59 | 92.72 | -2.47 | 91.97 | -3.26 | 91.88 | -3.36 | 91.63 | -3.62 | 91.97 | -3.26 |
| | TD2 | 94.94 | 92.60 | -2.46 | 92.24 | -2.84 | 91.92 | -3.18 | 91.22 | -3.92 | 91.27 | -3.87 | 91.52 | -3.60 |
| | TD3 | 94.84 | 93.24 | -1.69 | 92.85 | -2.10 | 92.23 | -2.75 | 91.42 | -3.61 | 91.38 | -3.65 | 91.82 | -3.18 |
| **Ave MD** | | 0.00 | | -2.34 | | -2.48 | | -2.25 | | -3.07 | | -2.66 | | -2.94 |
| **Ave TD** | | 0.00 | | -2.25 | | -2.47 | | -3.06 | | -3.63 | | -3.71 | | -3.35 |
| | MD1 | 90.06 | 87.63 | -2.70 | 87.60 | -2.73 | 87.15 | -3.23 | 86.96 | -3.44 | 87.23 | -3.14 | 86.99 | -3.41 |
| | MD2 | 89.58 | 87.63 | -2.18 | 87.83 | -1.95 | 87.26 | -2.59 | 87.21 | -2.65 | 87.20 | -2.66 | 87.20 | -2.66 |
| **4** | MD3 | 89.15 | 87.60 | -1.74 | 87.39 | -1.97 | 86.83 | -2.60 | 86.79 | -2.65 | 86.77 | -2.67 | 86.96 | -2.46 |
| | TD1 | 89.12 | 87.49 | -1.83 | 87.65 | -1.65 | 87.16 | -2.20 | 86.67 | -2.75 | 87.19 | -2.17 | 86.66 | -2.76 |
| | TD2 | 89.10 | 88.09 | -1.13 | 87.85 | -1.40 | 87.94 | -1.30 | 87.62 | -1.66 | 87.48 | -1.82 | 87.48 | -1.82 |
| | TD3 | 88.85 | 87.51 | -1.51 | 87.17 | -1.89 | 87.30 | -1.74 | 86.36 | -2.80 | 87.11 | -1.96 | 86.58 | -2.55 |
| **Ave MD** | | 0.00 | | -2.20 | | -2.22 | | -2.81 | | -2.91 | | -2.82 | | -2.84 |
| **Ave TD** | | 0.00 | | -1.49 | | -1.65 | | -1.75 | | -2.40 | | -1.98 | | -2.38 |
| | MD1 | 80.79 | 78.79 | -2.48 | 79.13 | -2.05 | 78.77 | -2.50 | 78.19 | -3.22 | 78.31 | -3.07 | 78.49 | -2.85 |
| | MD2 | 80.79 | 79.19 | -1.98 | 79.06 | -2.14 | 78.77 | -2.50 | 78.35 | -3.02 | 78.46 | -2.88 | 78.37 | -3.00 |
| | MD3 | 80.76 | 78.83 | -2.39 | 79.00 | -2.18 | 78.50 | -2.80 | 78.41 | -2.91 | 78.37 | -2.96 | 78.64 | -2.63 |
| **5** | TD1 | 80.88 | 79.83 | -1.30 | 79.80 | -1.34 | 79.60 | -1.58 | 79.20 | -2.08 | 79.37 | -1.87 | 79.26 | -2.00 |
| | TD2 | 81.75 | 79.43 | -2.84 | 79.95 | -2.20 | 79.66 | -2.56 | 78.86 | -3.54 | 79.46 | -2.80 | 79.48 | -2.78 |
| | TD3 | 81.73 | 79.69 | -2.50 | 80.09 | -2.01 | 79.11 | -3.21 | 79.12 | -3.19 | 79.53 | -2.69 | 79.52 | -2.70 |
| **Ave MD** | | 0.00 | | -2.28 | | -2.13 | | -2.60 | | -3.05 | | -2.97 | | -2.82 |
| **Ave TD** | | 0.00 | | -2.21 | | -1.85 | | -2.45 | | -2.94 | | -2.45 | | -2.49 |
| | MD1 | 82.57 | 80.02 | -3.09 | 79.50 | -3.72 | 79.38 | -3.86 | 78.55 | -4.87 | 79.22 | -4.06 | 79.10 | -4.20 |
| | MD2 | 83.04 | 80.68 | -2.84 | 80.64 | -2.89 | 79.99 | -3.67 | 79.95 | -3.72 | 80.13 | -3.50 | 80.13 | -3.50 |
| | MD3 | 83.27 | 81.12 | -2.58 | 81.11 | -2.59 | 80.79 | -2.98 | 80.35 | -3.51 | 80.43 | -3.41 | 80.28 | -3.59 |
| **6** | TD1 | 83.72 | 81.07 | -3.17 | 81.16 | -3.06 | 80.55 | -3.79 | 80.28 | -4.11 | 80.32 | -4.06 | 80.11 | -4.31 |
| **(comp)** | TD2 | 83.93 | 82.01 | -2.29 | 81.59 | -2.79 | 81.27 | -3.17 | 80.56 | -4.02 | 80.68 | -3.87 | 80.37 | -4.24 |
| | TD3 | 84.32 | 81.97 | -2.79 | 82.04 | -2.70 | 81.79 | -3.00 | 81.01 | -3.93 | 81.20 | -3.70 | 81.20 | -3.69 |
| **Ave MD** | | 0.00 | | -2.84 | | -3.07 | | -3.50 | | -4.03 | | -3.66 | | -3.77 |
| **Ave TD** | | 0.00 | | -2.75 | | -2.85 | | -3.32 | | -4.02 | | -3.88 | | -4.08 |

It will be seen that the films of Examples 1 to 5 exhibit improved shrinkage properties under tropical conditions in relation to the comparative example.

The shrinkage properties of the films were investigated under fridge conditions, and the results are shown in Table 5:

**Table 5**

| | | *0* | *1* | *Results* | *3* | *Results* | *6* | *Results* | *10* | *Results* | *14* | *Results* | *28* | *Results* |
|---|---|---|---|---|---|---|---|---|---|---|---|---|---|---|
| | MD1 | 109.56 | 109.26 | -0.27 | 110.22 | 0.60 | 108.97 | -0.54 | 107.82 | -1.59 | 107.61 | -1.78 | 108.18 | -1.26 |
| | MD2 | 109.53 | 109.17 | -0.33 | 109.95 | 0.38 | 108.86 | -0.61 | 107.89 | -1.50 | 107.42 | -1.93 | 107.20 | -2.13 |
| | MD3 | 109.23 | 109.18 | -0.05 | 109.60 | 0.34 | 109.26 | 0.03 | 107.75 | -1.35 | 107.99 | -1.14 | 107.64 | -1.46 |
| **1** | TD1 | 106.28 | 104.19 | -1.97 | 104.15 | -2.00 | 103.64 | -2.48 | 102.84 | -3.24 | 103.13 | -2.96 | 103.22 | -2.88 |
| | TD2 | 107.31 | 104.87 | -2.27 | 104.80 | -2.34 | 104.17 | -2.93 | 103.87 | -3.21 | 103.20 | -3.83 | 103.93 | -3.15 |
| | TD3 | 107.42 | 105.66 | -1.64 | 105.56 | -1.73 | 105.00 | -2.25 | 103.98 | -3.20 | 103.69 | -3.47 | 103.70 | -3.46 |
| **Ave MD** | | 0.00 | | -0.22 | | 0.44 | | -0.37 | | -1.48 | | -1.61 | | -1.61 |
| **Ave TD** | | 0.00 | | -1.96 | | -2.02 | | -2.55 | | -3.21 | | -3.42 | | -3.16 |
| | MD1 | 89.15 | 88.35 | -0.90 | 87.78 | -1.54 | 88.67 | -0.54 | 87.20 | -2.19 | 87.18 | -2.21 | 86.46 | -3.02 |
| | MD2 | 89.42 | 88.04 | -1.54 | 87.74 | -1.88 | 89.48 | 0.07 | 87.19 | -2.49 | 87.13 | -2.56 | 86.82 | -2.91 |
| **2** | MD3 | 89.02 | 88.54 | -0.54 | 88.51 | -0.57 | 89.20 | 0.20 | 88.03 | -1.11 | 87.80 | -1.37 | 87.56 | -1.64 |
| | TD1 | 89.71 | 89.32 | -0.43 | 89.05 | -0.74 | 87.94 | -1.97 | 88.34 | -1.53 | 88.28 | -1.59 | 87.79 | -2.14 |
| | TD2 | 89.66 | 89.77 | 0.12 | 89.36 | -0.33 | 87.65 | -2.24 | 88.34 | -1.47 | 88.61 | -1.17 | 87.60 | -2.30 |
| | TD3 | 89.15 | 89.92 | 0.86 | 89.12 | -0.03 | 88.55 | -0.67 | 88.52 | -0.71 | 88.60 | -0.62 | 87.52 | -1.83 |
| **Ave MD** | | 0.00 | | -0.99 | | -1.33 | | -0.09 | | -1.93 | | -2.05 | | -2.52 |
| **Ave TD** | | 0.00 | | 0.18 | | -0.37 | | -1.63 | | -1.24 | | -1.13 | | -2.09 |
| | MD1 | 94.66 | 93.62 | -1.10 | 93.67 | -1.05 | 92.92 | -1.84 | 92.60 | -2.18 | 92.67 | -2.10 | 92.11 | -2.69 |
| | MD2 | 94.34 | 93.24 | -1.17 | 92.76 | -1.67 | 92.59 | -1.85 | 92.20 | -2.27 | 92.02 | -2.46 | 91.79 | -2.70 |
| **3** | MD3 | 94.31 | 93.19 | -1.19 | 92.37 | -2.06 | 92.21 | -2.23 | 91.60 | -2.87 | 91.67 | -2.80 | 91.54 | -2.94 |
| | TD1 | 95.07 | 95.10 | 0.03 | 95.59 | 0.55 | 95.20 | 0.14 | 94.34 | -0.77 | 94.43 | -0.67 | 94.02 | -1.10 |
| | TD2 | 94.94 | 94.91 | -0.03 | 95.51 | 0.60 | 95.28 | 0.36 | 94.32 | -0.65 | 94.31 | -0.66 | 93.64 | -1.37 |
| | TD3 | 94.84 | 95.15 | 0.33 | 95.45 | 0.64 | 95.25 | 0.43 | 94.26 | -0.61 | 94.25 | -0.62 | 93.71 | -1.19 |
| **Ave MD** | | 0.00 | | -1.15 | | -1.59 | | -1.97 | | -2.44 | | -2.45 | | -2.78 |
| **Ave TD** | | 0.00 | | 0.11 | | 0.60 | | 0.31 | | -0.68 | | -0.65 | | -1.22 |
| | MD1 | 82.21 | 80.15 | -2.51 | 80.20 | -2.44 | 79.55 | -3.24 | 79.45 | -3.36 | 79.78 | -2.96 | 79.42 | -3.39 |
| | MD2 | 81.97 | 80.75 | -1.49 | 80.74 | -1.50 | 80.55 | -1.73 | 79.93 | -2.49 | 79.83 | -2.61 | 79.81 | -2.64 |
| **4** | MD3 | 82.31 | 81.09 | -1.48 | 81.41 | -1.09 | 81.07 | -1.51 | 80.56 | -2.13 | 80.60 | -2.08 | 80.53 | -2.16 |
| | TD1 | 82.76 | 82.33 | -0.52 | 82.87 | 0.13 | 82.59 | -0.21 | 81.64 | -1.35 | 81.71 | -1.27 | 81.47 | -1.56 |
| | TD2 | 82.79 | 82.55 | -0.29 | 82.59 | -0.24 | 83.02 | 0.28 | 82.19 | -0.72 | 82.03 | -0.92 | 81.99 | -0.97 |
| | TD3 | 82.85 | 83.16 | 0.37 | 83.55 | 0.84 | 83.00 | 0.18 | 82.60 | -0.30 | 81.97 | -1.06 | 81.78 | -1.29 |
| **Ave MD** | | 0.00 | | -1.83 | | -1.68 | | -2.16 | | -2.66 | | -2.55 | | -2.73 |
| **Ave TD** | | 0.00 | | -0.15 | | 0.25 | | 0.08 | | -0.79 | | -1.08 | | -1.27 |
| | MD1 | 82.28 | 81.32 | -1.17 | 81.24 | -1.26 | 81.23 | -1.28 | 80.91 | -1.67 | 80.71 | -1.91 | 80.74 | -1.87 |
| | MD2 | 82.70 | 81.99 | -0.86 | 81.54 | -1.40 | 81.21 | -1.80 | 80.90 | -2.18 | 80.86 | -2.22 | 80.69 | -2.43 |
| | MD3 | 81.27 | 81.11 | -0.20 | 81.22 | -0.06 | 81.17 | -0.12 | 80.82 | -0.55 | 80.94 | -0.41 | 80.14 | -1.39 |
| **5** | TD1 | 82.17 | 81.67 | -0.61 | 82.26 | 0.11 | 81.97 | -0.24 | 81.00 | -1.42 | 80.97 | -1.46 | 80.14 | -2.47 |
| | TD2 | 82.16 | 82.16 | 0.00 | 81.94 | -0.27 | 81.93 | -0.28 | 80.76 | -1.70 | 80.73 | -1.74 | 80.75 | -1.72 |
| | TD3 | 81.73 | 81.45 | -0.34 | 82.23 | 0.61 | 81.29 | -0.54 | 80.57 | -1.42 | 80.45 | -1.57 | 80.36 | -1.68 |
| **Ave MD** | | 0.00 | | -0.74 | | -0.91 | | -1.07 | | -1.47 | | -1.51 | | -1.90 |
| **Ave TD** | | 0.00 | | -0.32 | | 0.15 | | -0.35 | | -1.52 | | -1.59 | | -1.95 |
| | MD1 | 90.20 | 88.02 | -2.42 | 88.10 | -2.33 | 87.92 | -2.53 | 87.66 | -2.82 | 87.43 | -3.07 | 87.48 | -3.02 |
| | MD2 | 90.49 | 87.73 | -3.05 | 88.12 | -2.62 | 88.12 | -2.62 | 87.85 | -2.92 | 87.76 | -3.02 | 87.52 | -3.28 |
| | MD3 | 90.56 | 87.86 | -2.98 | 88.14 | -2.67 | 88.40 | -2.39 | 87.86 | -2.98 | 87.74 | -3.11 | 87.51 | -3.37 |
| **6** | TD1 | 90.58 | 89.40 | -1.30 | 90.02 | -0.62 | 90.45 | -0.14 | 89.12 | -1.61 | 89.11 | -1.62 | 88.44 | -2.36 |
| **(comp)** | TD2 | 90.58 | 89.64 | -1.04 | 90.01 | -0.63 | 90.31 | -0.30 | 89.26 | -1.46 | 89.25 | -1.47 | 89.00 | -1.74 |
| | TD3 | 91.08 | 89.80 | -1.41 | 90.42 | -0.72 | 90.39 | -0.76 | 89.21 | -2.05 | 89.31 | -1.94 | 89.01 | -2.27 |
| **Ave MD** | | 0.00 | | -2.82 | | -2.54 | -2.51 | -2.51 | | -2.90 | | -3.07 | | -3.22 |
| **Ave TD** | | 0.00 | | -1.25 | | -0.66 | | -0.40 | | -1.71 | | -1.68 | | -2.13 |

It will be seen that the films of Examples 1 to 5 exhibit improved shrinkage properties under fridge conditions in relation to the comparative example.

### APPENDIX 1

### 6330 Regulation concerning Tobacco and Tobacco Products (Tobacco Regulation)

### Regulation Concerning Tobacco and Tobacco Products (Tobacco Regulation)

### of December 20, 1977

(BGBl. I, p. 2831), as amended by the 1st Amending Regulation of 10.26.1982 (BGBl. I, p.1444), § 7 Para. 7 of the Additives Sales Regulation of 7.10.1984 (BGBl. I, p. 897), the 2nd Amending Regulation of 3.21.1986 (BGBI. I, p. 368), § 9 of the TabKTHmV Regulation of 10.29.1991 (BGBl. I, p. 2053), Article 1 of the Regulation of 3.8.1996 (BGBl. I, p. 460), Art. 21 of the Regulation Concerning the Revision of the Foodstuffs Additives Regulation of 1.29.1998 (BGBI. 1, p. 230) and the 3rd Amending Regulation of 12.8.2003 (BGBl. I, p. 2549)^{*}
^{*} The obligations of EC Directive 98/34 of the European Parliament and Council of June 22, 1998 concerning information procedures in the filed of standards and technical regulations (ABl. EC No. L 204, p. 37), amended by EC Directive 98/48 of the European Parliament and Council of July 20, 1998 (ABl. EC No. L 217, p. 18) have been taken into account.

Based on § 9, Para. 1, No. 5, § 20, Para. 3, § 21, Para. 1, No. 1, Letter a and. No. 2, in conjunction with § 19, No. 4, Letter b, and §22, Para. 2, Clause 2, of the Foodstuffs and Consumer Products Law of August 15,1974 (BGBl. I, pp. 1945,1946), in agreement with the Federal Ministers for Nutrition, Agriculture, Forestry and Economy, and with the consent of the Bundesrat, it is decreed:

§ 1
(1) The substances listed in Attachment 1 are approved for the commercial manufacture of tobacco products for the purposes specified therein. The approval of the substances listed in Attachment 1 Part B runs until December 31, 2006.
(2) The amounts of the approved substances in the tobacco products must not exceed the maximum amounts specified in Attachment 1.
(3) The approved substances must meet the purity requirements specified in Attachment 1 and the general and applicable special purity requirements of the Additives Sales Regulation.

§ 2
(1) Odorants and flavorants listed in Attachment 2, No. 1, or obtained from plants or plant parts listed in Attachment 2, No. 2, must not be used for commercial manufacture of tobacco products.
(2) As an exemption from the provision of Para. 1, camphor may be used for the manufacture of snuff in an amount of up to a maximum of 2 grams per 100 grams of product.
(3) The use of decoumarinized tonka beans for snuff (Attachment 1, No. 14, Letter b) remains unchanged.

§ 3
(1) Aromas containing a solvent listed in Attachment 1, No. 1, Clause 2, must display the wording "Only for the manufacture of tobacco products."
(2) For chewing tobacco, black rolled tobacco and snuff containing a substance listed in Attachment 1, No. 9, the content of these substances must be declared with the wording "with preservative."
(3) For chewing tobacco and black rolled tobacco containing a substance listed in Attachment 1, No. 10, Letter d, and for snuff containing a substance listed in Attachment 1, No. 10, Letter e, the content of these substances must be declared with the wording "with colorant."
(4) For chewing tobacco containing saccharin, the content' of this substance must be declared with the wording "with saccharin sweetener."
(5) For cigars containing a substance listed in Attachment 1, No. 10, Letter a, the content of this substance must be declared with the wording "colorant-delustered."
(6) The declarations specified in Para. 1 to 5 must be printed on packages, containers or other coverings in clearly visible, easily legible manner.
(7) With the exception of the cases indicated in Para. 1 to 5, a declaration of the substances allowed under § 1 is not required.

§ 3a (deleted)

§ 4 As an exception to § 22, Para. 2, Clause 1, No. 2 of the Foodstuffs and Consumer Products Law, cigars may display the declaration "natural colorant" or similar wording indicating the natural condition of the wrapper if they are neither colored nor powdered and have received no other surface treatment.

§ 5 The following may not be marketed commercially:
1. Cigars made with inserted tobacco sheets having a tobacco content of less than 75% on a dry weight basis.
2. Cigars with a tobacco sheet content exceeding 25% of the weight of the product, less the weight of a mouthpiece; for cigars with an artificial wrapper, this maximum amount is reduced by the weight of the artificial wrapper.
3. Smoking tobacco and cigarettes containing tobacco sheets with a tobacco content of less than 75% on a dry weight basis.
4. Smoking tobacco and cigarettes in which the proportion of tobacco sheets exceeds 25% of the weight of the tobacco mixture.
5. Chemically bleached tobacco products.
6. Colored cigarette tobacco.
7. Colored smoking tobacco, with the exception of black rolled tobacco.
8. Cigars with an artificial wrapper or a wrapper consisting of a tobacco sheet, provided this is declared on the packages by a clearly visible, easily legible statement "with artificial wrapper"; if the weight proportion of tobacco in the wrapper exceeds 50%, the wording "with tobacco-containing artificial wrapper" may be used instead. For cigars with a wrapper consisting of a tobacco sheet, the declaration may be omitted if the weight proportion of tobacco in the tobacco sheet is at least 75% on a dry weight basis.

§ 5a It is forbidden to market commercially tobacco products for oral uses other than smoking or chewing.

§ 6
(1) According to § 52, Para. 1, No. 2, of the Foodstuffs and Consumer Products Act, anyone who commercially markets aromas that, in violation of § 3, Para. 1 or 6, are not provided with the required statement or it is not displayed in the prescribed manner will be subject to a penalty.
(2) According to § 52, Para. 2, No. 1, of the Foodstuffs and Consumer Products Act, anyone will be subject to a penalty who
   1. in the commercial manufacture of tobacco products intended for sale, uses
      a) a substance listed in Attachment 1 in an amount exceeding the maximum permissible amount specified in § 1, Para. 2, or in violation of the purity requirements specified in § 1, Para. 3, or
      b) any odorant or flavorant in violation of $ 2, Para. 1.
   2. commercially markets or sells tobacco products for which, in violation of § 3, Para. 2 to 5 or 6, the content' of a substance is not declared or is not declared in the manner specified, or
   3. commercially markets or sells tobacco products in violation of the prohibition in S 5 or 5a.
(3) Committing an act defined in Para. 1 or 2 out of negligence constitutes a misdemeanor under § 53, Para. 1 of the Foodstuffs and Consumer Products Act.

### § 7 Berlin Clause

§ 8
(1) This regulation became effective on January 1, 1978.
(2) Tobacco products complying with the stipulations of this Regulation in its version valid on December 18, 2003 may continue to be manufactured until June 18, 2004 and be marketed until stocks have been consumed.

### Attachment 1 to § 1

### Part A

### Approved Substances

1. Generally approved as additives for the manufacture of tobacco products:
   Aromas meeting the requirements of the Aroma Regulation
   Fruits, dried fruits, fruit pulps, fruit juices, concentrated fruit juices and fruit syrups Spices with the exception of the plants and plant parts specified in Attachment 2, No. 2 Licorice root
   Licorice
   Coffee
   Tea and tea-like products
   Cocoa and cocoa products
   Alcoholic spirits
   Wine and liqueur (fortified) wine
   Honey
   Maple syrup
   Sugars as defined under the Sugar Varieties Regulation and other sugar varieties suitable for human consumption, also caramelized
   Dextrins
   Molasses
   Starch,
   Acid-treated, thin-boiling starch
   Oxidatively degraded starch
   Starch phosphate
   The above starches also in the form of swollen starches
   Kitchen salt (sodium chloride)
   Drinking water

   Essences containing the following solvents may also be used for the manufacture of cigarettes, cigars, smoking tobacco and snuff
   1,3-butylene glycol
   (Purity requirements: boiling range at 1013 millibar (760 torr): 207-209° Celsius;
   refractive index n(20,D) = 1.440 ± 0.0005; bromine number by the Klein method = max. 0.1; proportion of reducing substances: as for glycerol, according to the rules of the [German] pharmacopoeia).
2. Humectants:
   a) For smoking tobacco, cigars, cigarettes, tobacco sheet and artificial wrapper:
      Glycerol (E 422)
      Hydrogenated glucose syrup
         (Purity requirements: clear, colorless, syrupy solutions containing hydrogenated saccharides derived from glucose syrup and suitable for human consumption; minimum D-sorbitol content: 5% on a dry weight basis.)
      1,3-Butylene glycol (Purity requirements: see No. 1)
      1,2-Propylene glycol
      Triethylene glycol
      (Purity requirements: specific gravity 20/20° Celsius: 1.124- 1.126; boiling range at 1013 millibar (760 torr): 280-290° Celsius; refractive index n (20,D) = 1.4550-1.4560; ash content: less than 0.01 % by weight; monoethylene glycol content: less than 0.1% by weight)
      Orthophosphoric acid (E 338)
      Glycerophosphoric acid and its sodium, potassium and magnesium compounds up to a maximum total amount of 5% on a dry weight basis
   b) For chewing tobacco:
      Glycerol (E 422) up to 10% on a dry weight basis of the product
      Hydrogenated glucose syrup (Purity requirements: see letter a)
   c) For snuff
      Hydrogenated glucose syrup (Purity requirements: see letter a)
      Liquid paraffin up to a maximum amount of 25% on a dry weight basis of the product Glycerol (E 422) up to 10% on a dry weight basis of the product
      1,2-Propylene glycol
      1,3-Butylene glycol (Purity requirements: see No. 1)
3. Glues, Adhesives and Thickening Agents
   a) For cigars, rope tobacco including black rolled tobacco, tobacco sheets and artificial wrappers, as well as glue for seams, filter coverings, mouthpieces and filter (mouthpiece) coatings for cigarettes
      Gelatin
      Shellac
      Collodion
      Cellulose acetate
      Ethylcellulose, also hydroxyethylated
      Methylcellulose (E 461), also hydroxyethylated or carboxymethylated Carboxymethylcellulose and its sodium (E 466), potassium, calcium and magnesium compounds, also methylated
      Carboxymethylstarch with an etherification degree of up to 0.5, dialdehyde starch, prepared from oxidized corn starch with an aldehyde content of at least 90%
      Gum arabic (E 4 14)
      Agar (E 406)
      Alginic acid (E 400)
      Sodium alginate (E 401)
      Potassium alginate (E 402)
      Calcium alginate (E 404)
      Tragacanth (E 4 13)
      Locust bean meal (E 410)
      Guar seed meal (guar gum) (E 412)
      Mixtures of:
      aa) aqueous dispersions of polyvinyl acetate, also partially hydrolyzed, or of the copolymers of vinyl acetate with vinyl esters of long-chain aliphatic, saturated carboxylic acids having a chain length of C₁₈ or with ethylene, and
      bb) aqueous solutions of polyvinyl alcohol; glycerol acetate may be added to these mixtures.
   b) For tobacco sheet:
      Glyoxal in a maximum amount of 2% on a dry weight basis of the product or
      Melamine formaldehyde resin to a maximum of 2% on a dry weight basis of the product
   c) For smoking tobacco:
      Agar (E 406)
      Gum arabic (E 414)
   d) For chewing tobacco: Gum arabic (E 414) to a maximum amount of 25% on a dry weight basis of the product
4. Whitening and combustion control agents
   Aluminum hydroxide
   Aluminum sulfate
   Aluminum oxide
   Magnesium oxide
   Talc
   Titanium dioxide (E 17 1)
   Sodium, potassium, calcium and magnesium compounds of carbonic acid, formic acid, acetic acid, malic acid, citric acid, tartaric acid, lactic acid and nitric acid.
5. Substances for artificial wrapper and cigarette paper
   Cellulose containing substances listed in No. 3, Letter a, and in No. 4.
6. Substances for filters of cigarettes, cigarette tips, cigars, cigar tips and tobacco pipes Activated charcoal
   (Purity requirements: No increase in fluorescence of the solvent after a two-hour extraction with optically pure cyclohexane or benzene in a Soxhlet apparatus.)
   Aluminum oxide
   Cellulose acetate
   Glycerol acetate as binder for cellulose acetate
   Silica gel
   Magnesium silicate hydrate (Meerschaum)
   Polyethylene
   Titanium dioxide (El 17 1) up to 2% of the filter weight
   Triethylene glycol diacetate
   (Purity requirements: Specific gravity at 20/20° Celsius 1.110 - 1.130, boiling range of the major fraction from 5 to 95 mL of a 100 mL sample at 1013 millibar (760 Torr) 288 - 300° Celsius, at 67 millibar (50 Torr) 195 - 205° Celsius, color at most weakly yellowish, refractive index n (20,D) 1.438 - 1.439, viscosity 9.5 - 9.7 cps at 25° C, triethylene glycol diacetate content at least 97.0%, di-, tetra- and polyethylene glycol diacetate content no more than 1.2%, monoethylene glycol content no more than 0.1%, acids (calculated as acetic acid) not more than 0.05%, maximum water content 0.2%, maximum mineral content 0.01%)

   Mixtures of:
   a) aqueous dispersions of polyvinyl acetate, also partially hydrolyzed, or of copolymers of vinyl acetate with vinyl esters of long-chain aliphatic saturated carboxylic acids having a chain length up to C₁₈ or with ethylene, and
   b) aqueous solutions of polyvinyl alcohol
      as glue for gluing mouthpieces and filter (mouthpieces) covering. Glycerol acetate may be added to these mixtures.
      Ethyl citrate in cigarette filters
      (Purity requirements: clear, colorless, viscous liquid, odor-free, [without acid content equivalent to 20.2 ± 0.6 mL of 0.2 N KOH/g; total heavy metal content less than 10 ppm; arsenic less than 3 ppm)
7. Substances for filter wrappers, mouthpieces and filter (mouthpiece) covering:
   Paper, cardboard, cellulose
   Cork and straw
      (Purity requirements: must be free of contaminants, particularly Salmonella-free)
   Aluminum (E 173)
   Aluminum foil, also with protective lacquer
      (Purity requirements: Taking into account their composition, the lacquer coatings must be dried in such a manner that no volatile fractions, and particularly no solvents, will be transferred from them to the mouthpieces. After application to an appropriate carrier material, 1 dm² of lacquered surface must not release more than
         a) 5.0 mg soluble substances
         b) 1.0 mg phenolic substances
         c) 0.3 mg formaldehyde
         d) 1.0 mg zinc ions
         e) 1.0 mg organically bound nitrogen; no aromatic amines must be detectable during extraction with distilled water at 40°C within 10 days.)
8. Substances for hot melts for gluing filter wrappers, mouthpieces and filter (mouthpiece) covering:
   a) Copolymers of ethylene and vinyl esters of aliphatic saturated monocarboxylic acids with chain lengths C₂-C₁₈.
      (Purity requirements: the melting index according to DIN 53735 must not exceed 500)
   b) Hydrogenated polycyclopentadiene resin
      (Purity requirements: The viscosity must be at least 2,000 cps at 140°C)
   c) Microcrystalline waxes
   d) Paraffins of Attachment 2 of the Additives Sales Regulation
   e) Mixed styrene polymers and graft polymers from styrene, alpha-methyl styrene and vinyltoluene.
      (Purity requirements: From a 3 dm² sheet weighing 10 g produced from the product, when heated to 90°C within 24 hours, not more than 15 mg/dm2 of volatile organic substances shall be released.)
   f) Polyisobutylene
   g) Glycerol and pentaerythritol esters of rosin acid and their hydrogenation products
   h) 2,6-Ditert.butyl-4-methylphenol
      (Purity requirements: No more than 0.5% of this substance may be added as an antioxidant during preparation of hot melt from substances listed under letters a to e.)

   The substances listed under letters a to g may contain only technically unavoidable residues of monomer starting materials and of any added extractable manufacturing aids.
9. Preservatives, but not for cigars or cigarettes, with the exception of cigarette seam glue and tobacco sheet:
   Sorbic acid (E 200), sodium sorbate, potassium sorbate (E 202) and calcium sorbate (E 203) up to 2 grams per kilogram of product on a dry weight basis
   Benzoic acid (E 2 10) and sodium benzoate (E 2 11) up to 5 grams per kilogram of product, calculated as benzoic acid on a dry weight basis
   Ethyl para-hydroxybenzoate (E 214) and propyl para-hydroxybenzoate (E 216) and their sodium compounds (E 2 15 and E 2 17) up to 5 grams per kilogram of product calculated as benzoic acid on a dry weight basis
   For tobacco sheets, also thiabendazole (E 233) up to 0.6 gram per kilogram of product on a dry weight basis.
   If these preservatives are used in a mixture with one another, the maximum amount indicated for each substance shall be reduced by a percentage equivalent to the cumulative maximum amounts of the other substances contained in the mixture.
10. Colorants
   a) For cigarette paper and for wrapper, tobacco sheet and artificial wrapper for cigars:
      Humic acid and its alkali salts
         (Purity requirements: These substances must not contain extractable polycyclic aromatic hydrocarbons with three or more rings.)
      Buckthorn berry extract, prepared by extracting buckthorn berries (Rhamnus cartharticus) with water
      Logwood extract, prepared by extracting the heart wood of Haematoxylon campechianum with water
      Yellowwood extract, prepared by extracting yellowwood (Morus tinctoria) with water Carbo medicinalis vegetabilis [vegetable medicinal carbon] (E153)
      Brilliant Black BN (E151)
      Cochineal Red A '(E124)
      Fast Red F
      Sunset Yellow S (E110)
      Orange GGN
      Indigotin I (E132)
      Amaranth (E123)
      Tartrazine (E102)
      and their aluminum, calcium and magnesium compounds (so-called lakes).
   b) For filter wrappers, mouthpieces and filter (mouthpiece) covering for cigars and cigarettes The substances listed under letter a as well as gold foil (E 175)
      Gold bronze (copper-zinc alloy with a maximum zinc content of 15%)
      Silver bronze (aluminum E173)
      Calcium carbonate (E 170)
      Calcium sulfate
      Titanium dioxide (E 171), also mixed with mica, where the mica content must not exceed 75% and the colorant mixture must be enveloped by a lacquer binding agent.
      Iron oxides and iron hydroxides (yellow, red, brown, black) (E 172) α-(3-Nitro-5-sulfo-6-hydroxyphenylazo)-acetoacetanilide, 1:1 chromium complex, amine salt, and 4-(3-nitro-5-sulfo-6-hydroxyphenylazo)-1-phenyl-3-methylpyrazolone-5, 1:1 chromium complex, amine salt, for protective lacquer of aluminum foil, up to a total of 150 mg/m²
      Coconut shell meal
      (Purity requirements: must be free of foreign matter, particularly Salmonellae)
   c) For glues, adhesives and thickening agents for cigars and smoking tobacco:
      Caramel
   d) For chewing tobacco and black rolled tobacco:
      Iron(II1) sulfate (ferric sulfate)
         (Purity requirements as specified in the [German] pharmacopoeia)
         Tannin
   e) For snuff:
      Iron(II1) sulfate (ferric sulfate)
         (Purity requirements as specified in the [German] pharmacopoeia)
      Tannin
      Iron oxide, red (E172)
      Carbo medicinalis vegetabilis [vegetable medicinal carbon] (E153)
      Indigotin I (E132)
11. Plasticizers for inks and coatings used for printing on cigarette paper, cigarette filters, filter wraps, mouthpieces and filter (mouthpiece) tipping:
   Glycerol acetate
12. Binding agents for printing inks and coatings of filter wrappers, mouthpieces and filter (mouthpiece) tipping:
   The substances listed under No. 3, Letter a.
13. Substances for printing on cigarette paper and mouthpiece and filter (mouthpiece) tipping paper:
   a) The colorants listed in the Additives Approval Regulation
   b) The other substances listed above under Number 10, Letters a and b, and Numbers 11 and 12
   c) Chrysoin S
      Fast Yellow
      Archil
      Scarlet GN
      Ponceau 6 R
      Anthraquinone Blue
      Black 7984
   d) Magnesium carbonate
      Aluminum oxide
      Unsaturated drying oils, namely linseed oil and wood oil and the stand oils produced from them by heating.
      Paraffin, fluid and viscous
      Deodorized mineral oil, up to 25 vol.% in the printing ink ready for use
      (Purity requirements: boiling range at 1013 millibar [760 torr]: 200-350° Celsius, all fragrances and flavorants removed.)
      Hydrogenated colophonium (rosin) esters and trihydric or polyhydric alcohols of C₃-C₆ Phenol-formaldehyde-modified colophonium (rosin)
      Xylene-formaldehyde-modified colophonium (rosin)
      Acrylic acid-modified and/or maleic acid-modified colophonium (rosin) and their esters with trihydric and polyhydric alcohols of C₃-C₆
      Alkyd resins (polyester from polyhydric alcohols and phthalic acid), also fatty acid modified; fatty acid chain length of C₆ and higher
      Condensation products and etherified condensation products of purified monovalent and polyvalent, optionally alkylated phenols with formaldehyde
      Xylene-formaldehyde resins and their condensation products with phenol or alkylated phenols
      Fatty acid-modified phenol-formaldehyde resins, chain length of the fatty acid greater than C₆
      Drying agents in accordance with German Industry Standard [DIN] 55901; salts and oxides of cobalt, manganese, iron, calcium, zirconium and cerium with naphthenic acids, saturated, primarily tertiary, monocarboxylic acids of C₉-C₁₁ and 2-ethyl caproic (hexanoic) acid.
      The dried lacquer film may contain at most 0.2% of cobalt or at most 0.5% of the other drying agents (each based on the metal).
14. Other additives
   a) For chewing tobacco:
      Ammonium chloride
      Potassium aluminum sulfate
      Calcium chloride
      Monopotassium tartrate (tartar)
      Saccharin
   b) For snuff
      Yeast
      Edible fats and oils Decoumarinized tonka beans; the coumarin content of the snuff at most 0.003% Ammonium carbamate (hartshorn salt) Sodium carbonate:
      Potassium carbonate
      Calcium carbonate (E170)
      Ammonium chloride
      Ammonium hydroxide
      Calcium chloride
      Calcium hydroxide
      Monopotassium tartrate (tartar)
      1,3-butylene glycol
         (For purity requirements see Number 1)
   c) For white snuff powder:
      Ammonium carbamate (hartshorn salt)
      Sodium carbonate
      Calcium carbonate (E170)
      Ammonium chloride
      Calcium chloride

### Part B

### Provisionally approved substances

1. Glues, adhesives and thickening Agents for cigars, rope tobacco including black rolled tobacco, tobacco sheets and artificial wrappers, as well as glue for seams, filter coverings, mouthpieces and filter (mouthpiece) coatings for cigarettes
   a) Hydroxypropylstarch (E1440)
   b) Acetylated distarch adipate (E1422)
2. Plasticizers for inks and coatings used for printing on cigarette paper, cigarette filters, filter wraps, mouthpieces and filter (mouthpiece) tipping:
   a) Acetyl tributyl citrate up to 10% of the product
   b) Sucrose acetate isobutyrate up to 10% of the product

### Attachment 2 to §12, Para. 1

### Prohibited Odorants and Flavorants

1. Agaric acid (agaricine, Acidum agarinicum)
   Birch tar oil (oleum Betulae empyreumaticum)
   Bitter almond oil containing free or bound hydrocyanic acid
   Sassafras oil (oleum Sassafras)
   Juniper tar oil (oleum Juniperi empyreumaticum)
   Camphor oil
   Camphor
   Coumarin
   Safrole
   Thujone
2. Odorants and flavorants produced from:
   Woody nightshade (Bittersweet) stems (stipites Dulcamarae) Camphor wood (lignum Camphorae)
   Polypodium rootstock (rhizoma Polypodii, rhizoma Filicis dulcis) Pennyroyal (herba Pulegii)
   Quassia wood (bitterwood, lignum Quassiae)
   Quillaia bark (cortex Quillaiae, soap bark)
   Tansy (herba Tanaceti, worm herb)
   Rue (herba Rutae)
   Sassafras wood (lignum Sassafras)
   Sassafras leaves (folia Sassafras)
   Sassafras bark (cortex Sassafras)
   Yellow sweet clover (Melilotus officinalis)
   Tonka beans (semen Toncae)
   Vanilla plant (Deer tongue) (Liatris odoratissima)
   Woodruff (Asperula odorata)

## Claims

1. A cigarette filter tipping film comprising a biodegradable substrate, softener in an amount of less than 25% by weight of the biodegradable substrate and an antiblock additive, the tipping film being at least partly transparent and exhibiting:
a. an elongation in the machine direction of less than 15%;
b. a tensile strength in the machine direction of more than 140MPa;
c. a Young's Modulus in the machine direction of more than 4000MPa;
d. a shrinkage under tropical conditions in the machine and/or transverse directions of less than 5%;
e. a Haze of less than 2.15; and/or
f. a Gloss of more than 98.

2. A cigarette filter tipping film according to claim 1 wherein the biodegradable substrate is selected from cellulosic substrates, PLA substrates, starch based polymers, hydroxyalkanoates and other biopolymers.

3. A cigarette filter tipping film according to claim 2 wherein the biodegradable substrate is a cellulosic substrate.

4. A cigarette filter tipping film according to any one of claims 1 to 3 wherein the softener is present in the tipping film in an amount of less than 24% by weight of the biodegradable substrate.

5. A cigarette filter tipping film according to any one of claims 1 to 4 wherein the softener is selected from glycerol, propane-1,2-diol, and a combination thereof.

6. A cigarette filter tipping film according to any one of claims 1 to 5 wherein the antiblock additive is selected from amorphous silica, polyethylene glycol, and a combination thereof.

7. A cigarette filter tipping film according to claim 6 wherein the antiblock additive is provided in an amount of less than about 0.5% by weight of the biodegradable substrate.

8. A cigarette filter comprising a filtration material encased in a cylinder of the tipping film of any one of claims 1 to 7.

9. A cigarette comprising a smokable substance and a filter according to claim 8.

10. A cigarette filter plug material comprising the tipping film of any one of claims 1 to 7 when mechanically treated.

## Patentansprüche

1. Zigarettenfilter-Hüllfilm umfassend ein biologisch abbaubares Substrat, Weichmacher in einer Menge von weniger als 25 Gew.-% des biologisch abbaubaren Substrats und ein Antiblock-Additiv, wobei der Hüllfilm zumindest teilweise transparent ist und folgende Eigenschaften aufweist:
a. eine Dehnung in Maschinenrichtung von weniger als 15 %;
b. eine Zugfestigkeit in Maschinenrichtung von mehr als 140 MPa;
c. einen Elastizitätsmodul in Maschinenrichtung von mehr als 4000 MPa;
d. eine Schrumpfung unter tropischen Bedingungen in Maschinen- und/oder Querrichtung von weniger als 5 %;
e. eine Trübung von weniger als 2,15; und/oder
f. einen Glanz von mehr als 98.

2. Zigarettenfilter-Hüllfilm nach Anspruch 1, wobei das biologisch abbaubare Substrat ausgewählt ist aus Zellulose-Substraten, PLA-Substraten, Polymeren auf Stärkebasis, Hydroxyalkanoaten und anderen Biopolymeren.

3. Zigarettenfilter-Hüllfilm nach Anspruch 2, wobei das biologisch abbaubare Substrat ein Zellulose-Substrat ist.

4. Zigarettenfilter-Hüllfilm nach einem der Ansprüche 1 bis 3, wobei der Weichmacher in dem Hüllfilm in einer Menge von weniger als 24 Gew.-% bezogen auf das biologisch abbaubare Substrat vorliegt.

5. Zigarettenfilter-Hüllfilm nach einem der Ansprüche 1 bis 4, wobei der Weichmacher ausgewählt ist aus Glyzerin, Propan-1,2-diol und einer Kombination davon.

6. Zigarettenfilter-Hüllfilm nach einem der Ansprüche 1 bis 5, wobei das Antiblock-Additiv aus amorpher Kieselsäure, Polyethylenglykol und einer Kombination davon ausgewählt ist.

7. Zigarettenfilter-Hüllfilm nach Anspruch 6, wobei das Antiblock-Additiv in einer Menge von weniger als 0,5 Gew.-% bezogen auf das biologisch abbaubare Substrat vorgesehen wird.

8. Zigarettenfilter umfassend ein Filtermaterial, das in einen Zylinder aus dem Hüllfilm nach einem der Ansprüche 1 bis 7 eingehüllt ist.

9. Zigarette umfassend eine rauchbare Substanz und einen Filter nach Anspruch 8.

10. Zigarettenfilter-Stopfenmaterial umfassend den Hüllfilm nach einem der Ansprüche 1 bis 7, sofern es mechanisch behandelt wird.

## Revendications

1. Film de manchette de filtre de cigarette comprenant un substrat biodégradable, un plastifiant en une quantité inférieure à 25% en poids du substrat biodégradable et un additif antiadhérent, le film de manchette étant au moins partiellement transparent et présentant :
a. un allongement dans le sens machine inférieur à 15% ;
b. une résistance à la traction dans le sens machine supérieure à 140 MPa ;
c. un module de Young dans le sens machine supérieur à 4000 MPa ;
d. un retrait dans des conditions tropicales dans les sens machine et/ou transversal inférieur à 5% ;
e. une brume inférieure à 2,15 ; et/ou
f. un brillant supérieur à 98.

2. Film de manchette de filtre de cigarette selon la revendication 1, dans lequel le substrat biodégradable est choisi parmi des substrats cellulosiques, des substrats PLA, des polymères à base d'amidon, des hydroxyalcanoates et d'autres biopolymères.

3. Film de manchette de filtre de cigarette selon la revendication 2, dans lequel le substrat biodégradable est un substrat cellulosique.

4. Film de manchette de filtre de cigarette selon l'une quelconque des revendications 1 à 3, dans lequel le plastifiant est présent dans le film de manchette en une quantité inférieure à 24% en poids du substrat biodégradable.

5. Film de manchette de filtre de cigarette selon l'une quelconque des revendications 1 à 4, dans lequel le plastifiant est choisi parmi le glycérol, le propane-1,2-diol et une combinaison de ceux-ci.

6. Film de manchette de filtre de cigarette selon l'une quelconque des revendications 1 à 5, dans lequel l'additif antiadhérent est choisi parmi la silice amorphe, le polyéthylèneglycol et une combinaison de ceux-ci.

7. Film de manchette de filtre de cigarette selon la revendication 6, dans lequel l'additif antiadhérent est fourni en une quantité inférieure à environ 0,5% en poids du substrat biodégradable.

8. Filtre de cigarette comprenant un matériau filtrant enfermé dans un cylindre du film de manchette de l'une quelconque des revendications 1 à 7.

9. Cigarette comprenant une substance fumable et un filtre selon la revendication 8.

10. Matériau de bout-filtre de cigarette comprenant le film de manchette de l'une quelconque des revendications 1 à 7 lorsqu'il est traité mécaniquement.
